# FASCICULE DE BREVET EUROPEEN

(11) **EP 0 599 172 B1**
(45) Date de publication et mention de la délivrance du brevet: **11.09.1996**
(21) Numéro de dépôt: 93118437.8
(22) Date de dépôt: 15.11.1993
(51) Int. Cl.: A47J 31/54, F24H 1/14, H05B 3/68

(54) **Procédé de fabrication d'un chauffe-eau électrique pour distributeur de boissons chaudes et chauffe-eau obtenu par ce procédé**
Verfahren zum Herstellen eines Wassererhitzers für Ausgabevorrichtung für warme Getränke und danach hergestellter Wassererhitzer
Method of manufacturing an electric water heater for a hot beverage dispenser and water heater so obtained

(30) Priorité: 20.11.1992 FR 9214004
(43) Date de publication de la demande: 01.06.1994
(73) Titulaire: MOULINEX S.A., F-93170 Bagnolet (FR)
(72) Inventeur: Beaulieu, Alain Bernard Marc, F-61000 Alençon (FR); Schiettecatte, Patrice Jean Cornelius, F-61000 Alençon (FR)
(74) Mandataire: May, Hans Ulrich, Dr.

(56) Documents cités:
- DE-U- 7 703 291
- DE-U- 7 707 584
- DE-U- 7 805 746
- DE-U- 8 715 900

## Description

La présente invention concerne un procédé de fabrication d'un chauffe-eau électrique pour distributeur de boissons chaudes telles que café et thé, ledit chauffe-eau comprenant un tube en aluminium de conduite d'eau auquel est associé mécaniquement et thermiquement un corps tubulaire de chauffe électrique.

Pour réaliser un chauffe-eau de ce type, il est connu, notamment d'après les documents DE-U-87 15 900 et DE-A-35 42 507, de mettre en oeuvre un procédé consistant à former conjointement le tube de conduite d'eau et le corps de chauffe dans une seule pièce constituée par un profilé bitube en alliage d'aluminium dur obtenu par extrusion à chaud ; ce profilé bitube présente un pontet destiné à assurer le transfert thermique entre le corps de chauffe et le tube de conduite d'eau.

Toutefois, pour un tel chauffe-eau électrique dont le tube de conduite d'eau est en aluminium, il se pose alors le problème d'une possible diffusion dans l'eau d'une petite quantité d'aluminium susceptible de dépasser une dose limite établie par le Ministère de la Santé, et partant de nuire gravement à la santé du consommateur.

Pour résoudre ce problème, toujours d'après le brevet précité, il est connu d'introduire, après obtention du profilé bitube, un tube en acier inoxydable dans le tube en aluminium de conduite d'eau. Cependant, du fait que le profilé bitube en aluminium est obtenu par extrusion à chaud, il s'avère que lors de son refroidissement, le retrait du métal déforme le tube de conduite d'eau principalement au niveau du pontet thermique, de sorte que le tube de conduite d'eau n'est pas parfaitement cylindrique. Même lors de l'introduction à force du tube en acier inoxydable dans le tube de conduite d'eau, ce dernier ne parvient pas à reprendre sa forme primitive cylindrique, pour la raison notamment que le matériau du profilé bitube extrudé à chaud est un alliage d'aluminium dur. En conséquence, une fois le tube en acier inoxydable introduit dans le tube de conduite d'eau, il apparaît de petits espaces entre les deux tubes ; dans ces espaces libres, le contact thermique entre les deux tubes est mauvais et s'aggrave dans le temps par apparition d'alumine en particulier à cause de la grande différence de potentiel d'oxydoréduction entre l'aluminium et l'acier inoxydable.

Par ailleurs, un tel chauffe-eau comporte d'une manière connue en soi un support pour un thermostat et un fusible, lequel support est soudé au tube de conduite d'eau, de sorte qu'un mauvais contact thermique entre les deux tubes conduit à une dégradation tant de la régulation thermique par le thermostat que de la sécurité thermique par le fusible.

L'invention a pour but de remédier à ces inconvénients.

Elle propose donc un procédé de fabrication d'un chauffe-eau électrique, lequel est destiné à être monté dans un distributeur de boissons chaudes et comprend un tube en aluminium de conduite d'eau associé à un corps tubulaire de chauffe électrique.

Selon l'invention, ce procédé est caractérisé en ce qu'à partir du tube de conduite d'eau et du corps de chauffe formés séparément, il consiste :
- à doubler intérieurement le tube de conduite d'eau d'un mince revêtement réalisé en un matériau inoxydable et résistant à la température d'utilisation du chauffe-eau,
- à assembler mécaniquement et thermiquement le tube de conduite d'eau doublé intérieurement au corps de chauffe.

Ainsi, on comprend qu'en partant dorénavant d'un simple tube en aluminium de conduite d'eau et d'un corps de chauffe formés individuellement et non plus d'un profilé bitube comme dans l'art antérieur, le doublage intérieur du tube devient facile à exécuter et ce sans apparition d'un quelconque espace libre entre ledit tube et son revêtement intérieur, d'où un contact thermique optimal entre ces derniers et une garantie totale d'absence de développement ultérieur d'alumine.

Selon un mode d'exécution préféré, le revêtement du tube de conduite d'eau est constitué par un tube en acier inoxydable qui est emmanché à force dans ledit tube de conduite d'eau.

Suivant une première variante d'exécution, le revêtement du tube de conduite d'eau étant également constitué par un tube en acier inoxydable, le doublage du tube de conduite d'eau consiste à emmancher sans serrage ledit tube dans le tube de conduite d'eau, puis à laminer le tube de conduite d'eau de manière à assurer le serrage des deux tubes entre eux.

Suivant une deuxième variante, le revêtement du tube de conduite d'eau étant aussi constitué par un tube en acier inoxydable, le doublage du tube de conduite d'eau consiste à emmancher sans serrage ledit tube dans le tube de conduite d'eau, puis à compacter les deux tubes de manière à assurer leur serrage.

Suivant une troisième variante, le revêtement du tube de conduite d'eau étant constitué par un ruban, le procédé consiste à former préalablement ledit ruban à partir d'une bande plate rectangulaire en acier inoxydable qui est roulée longitudinalement sur elle-même d'une manière telle que ses deux bords longitudinaux soient en recouvrement, le ruban ainsi formé ayant au repos un diamètre extérieur légèrement supérieur au diamètre intérieur du tube de conduite d'eau ; le doublage intérieur du tube de conduite d'eau consiste alors à rétreindre et à emmancher ledit ruban dans le tube de conduite d'eau, l'élasticité du ruban en acier inoxydable une fois emmanché assurant le serrage de celui-ci contre le tube de conduite d'eau.

Selon une autre caractéristique du procédé objet de l'invention, il est prévu, après doublage intérieur du tube de conduite d'eau et avant assemblage mécanique et thermique de celui-ci au corps de chauffe, un cintrage homothétique du tube de conduite d'eau et du corps de chauffe suivant une conformation sensiblement en U.

D'autres particularités et avantages de l'invention ressortiront d'ailleurs de la description qui va suivre, à titre d'exemple, en référence aux dessins annexés dans lesquels :
- la figure 1 est une vue en plan d'un mode de réalisation d'un chauffe-eau obtenu par le procédé selon l'invention ;
- la figure 2 est une vue en coupe, à échelle agrandie, selon la ligne II-II de la figure 1 ; et
- la figure 3 est une vue similaire à la figure 2, selon une variante de réalisation.

Sur ces différentes figures, les mêmes références se rapportent aux mêmes éléments.

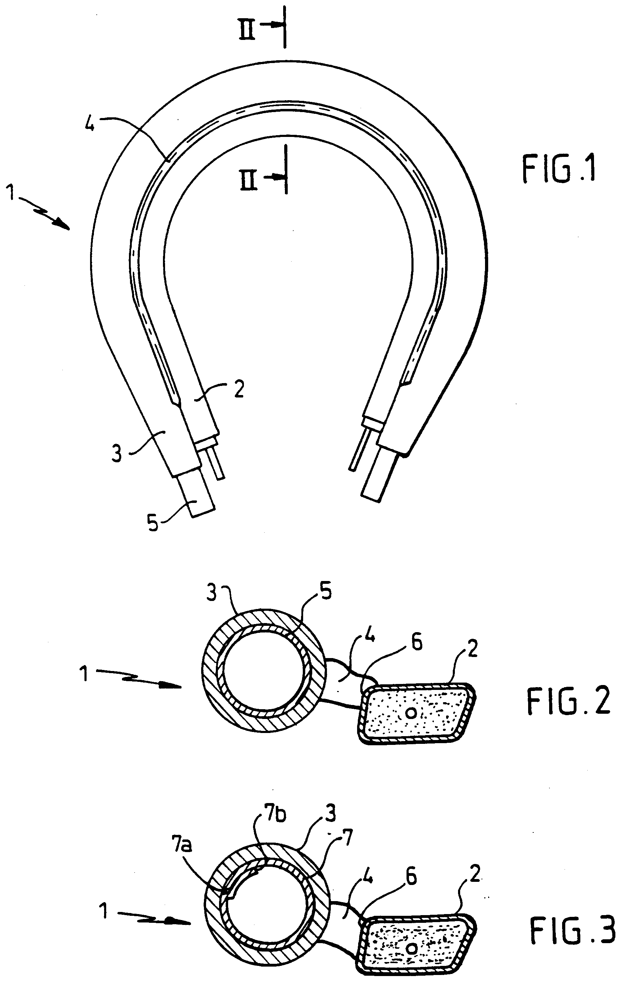

Suivant un exemple de réalisation illustré sur les figures 1 et 2, on a représenté en 1 un chauffe-eau à circulation qui est destiné à être monté dans un distributeur de boissons chaudes telles que café et thé et qui comprend un corps tubulaire cylindrique de chauffe électrique 2 réalisé par exemple en aluminium et conformé sensiblement en U, ainsi qu'un tube cylindrique de conduite d'eau 3 réalisé en aluminium assez mou et ductile, conformé sensiblement en U et relié mécaniquement et thermiquement au corps de chauffe 2 par un cordon de soudure 4.

Le tube en aluminium de conduite d'eau 3 est par ailleurs doublé intérieurement d'un mince revêtement constitué dans cet exemple par un tube cylindrique 5, d'épaisseur de l'ordre de 0,5 mm, et réalisé en un matériau inoxydable et résistant à la température d'utilisation du chauffe-eau, par exemple l'acier inoxydable.

Dans cet exemple, figures 1 et 2, le chauffe-eau 1 est réalisé, selon l'invention, par mise en oeuvre d'un procédé consistant dans un premier temps, en partant d'un simple tube droit de conduite d'eau 3 et d'un corps tubulaire droit de chauffe 2 formés séparément, à doubler intérieurement le tube de conduite d'eau 3 au moyen du tube 5 de manière à obtenir un bon contact thermique entre les deux tubes.

Selon un premier mode d'exécution, cette opération de doublage intérieur du tube de conduite d'eau 3 s'effectue par un emmanchement à force du tube 5 dans ledit tube de conduite d'eau 3, éventuellement avec un léger "gonflement" périphérique du tube de conduite d'eau 3. Ainsi, les deux tubes 3 et 5 sont longitudinalement serrés l'un contre l'autre, c'est-à-dire mutuellement en contact intime, de sorte qu'aucun espace libre n'existe entre les deux tubes.

Dans une variante d'exécution, l'opération de doublage intérieur du tube de conduite d'eau 3 s'effectue par un emmanchement sans serrage du tube 5 dans le tube de conduite d'eau 3, éventuellement avec des tolérances de diamètres respectifs assez larges, suivi d'un laminage du tube de conduite d'eau 3 afin d'assurer le serrage effectif des deux tubes 3 et 5 entre eux.

Dans une autre variante d'exécution, le doublage intérieur du tube de conduite d'eau 3 s'effectue également par un emmanchement sans serrage du tube 5 dans le tube de conduite d'eau 3, suivi cette fois d'un compactage cylindrique, par exemple à la presse, des deux tubes 3 et 5 de façon à assurer leur serrage.

Après cette opération de doublage intérieur du tube de conduite d'eau 3 par le tube 5, le procédé consiste ensuite à cintrer séparément le corps de chauffe 2 et les deux tubes emboîtés 3 et 5 respectivement selon deux arcs de cercle homothétiques, comme illustré à la figure 1, puis à compacter le corps de chauffe 2 de préférence selon une forme polygonale (voir figure 2), et enfin à souder ou à braser les pièces entre elles pour obtenir le cordon de soudure 4 en forme d'arc de cercle (figure 1).

Le soudage du tube de conduite d'eau 3 doublé intérieurement par le tube 5 avec le corps de chauffe 2, consiste en une soudure à l'arc électrique sous flux de gaz neutre, telle qu'une soudure de type M.I.G. (Metal Inert Gaz) ou de type T.I.G. (Tungsten Inert Gaz).

Dans le cas d'un brasage, le tube de conduite d'eau 3 doublé intérieurement par le tube 5 est soudé au corps de chauffe 2 par fusion d'un métal d'apport, par exemple un alliage d'aluminium au silicium, ce qui apporte une bonne adhésion.

On notera que le fait de compacter le corps de chauffe 2 (cylindrique au départ) selon une forme polygonale permet de déposer le cordon de soudure 4 dans une région angulaire 6 (figure 2) du corps de chauffe 2, de manière à obtenir une zone de bon contact thermique avec le tube de conduite d'eau 3 doublé intérieurement par le tube 5.

Selon la variante d'exécution illustrée sur la figure 3, le tube en aluminium de conduite d'eau 3 est doublé intérieurement d'un ruban 7, par exemple en acier inoxydable, dont les deux extrémités 7a, 7b sont en recouvrement.

Dans cet exemple, le ruban 7 est formé à partir d'une bande plate rectangulaire, par exemple en acier inoxydable, d'épaisseur de l'ordre de 0,5 mm, qui est roulée longitudinalement sur elle-même d'une manière telle que ses deux bords longitudinaux se recouvrent en vue de garder une certaine élasticité dans le sens du diamètre du ruban 7 ainsi formé. Le ruban 7 a, au repos, un diamètre extérieur légèrement supérieur au diamètre intérieur du tube de conduite d'eau 3, de sorte qu'une fois le ruban 7 emmanché dans le tube 3, l'élasticité du matériau du ruban 7, à savoir l'acier inoxydable dans cet exemple, maintient un serrage effectif entre le ruban et le tube de conduite d'eau. Ce serrage assure un bon contact thermique entre les deux pièces, quelles que soient les dispersions des valeurs des diamètres respectifs du ruban 7 et du tube 3.

Dans le cadre de cette variante, figure 3, on reprend, après emmanchement du ruban 7 dans le tube de conduite d'eau 3, les mêmes opérations successives (cintrage, compactage, soudure ou brasage) telles que décrites précédemment dans le cadre du mode de réalisation des figures 1 et 2.

D'autre part, le chauffe-eau tel que décrit ci-dessus comporte en outre, d'une manière connue en soi, un support (non représenté) pour un thermostat et un fusible ; de préférence, le support est soudé au tube de conduite d'eau par soudure à l'arc électrique sous flux de gaz neutre : ainsi, le bon transfert thermique réalisé grâce à la soudure à l'arc permet d'obtenir une réponse rapide du thermostat et du fusible, et donc d'améliorer la sécurité.

## Revendications

1. Procédé de fabrication d'un chauffe-eau électrique qui est destiné à être monté dans un distributeur de boissons chaudes et qui comprend un tube en aluminium de conduite d'eau (3) associé à un corps tubulaire de chauffe électrique (2), caractérisé en ce qu'à partir du tube de conduite d'eau (3) et du corps de chauffe (2) formés séparément, ledit procédé consiste :
- à doubler intérieurement le tube de conduite d'eau (3) d'un mince revêtement (5;7) réalisé en un matériau inoxydable et résistant à la température d'utilisation du chauffe-eau,
- à assembler mécaniquement et thermiquement le tube de conduite d'eau (3) doublé intérieurement au corps de chauffe (2).

2. Procédé selon la revendication 1, caractérisé en ce que le revêtement du tube de conduite d'eau étant constitué par un tube (5), le doublage intérieur du tube de conduite d'eau (3) consiste à emmancher à force ledit tube (5) dans le tube de conduite d'eau (3).

3. Procédé selon la revendication 1, caractérisé en ce que le revêtement du tube de conduite d'eau étant constitué par un tube (5), le doublage intérieur du tube de conduite d'eau (3) consiste à emmancher sans serrage ledit tube (5) dans le tube de conduite d'eau (3), puis à laminer le tube de conduite d'eau (3) de manière à assurer le serrage des deux tubes (3,5) entre eux.

4. Procédé selon la revendication 1, caractérisé en ce que le revêtement de conduite d'eau étant constitué par un tube (5), le doublage intérieur du tube de conduite d'eau (3) consiste à emmancher sans serrage ledit tube (5) dans le tube de conduite d'eau (3), puis à compacter les deux tubes (3,5) de manière à assurer leur serrage.

5. Procédé selon l'une des revendications 2 à 4, caractérisé en ce que le matériau du tube formant doublure (5) est de l'acier inoxydable.

6. Procédé selon la revendication 1, caractérisé en ce que le revêtement du tube de conduite d'eau étant constitué par un ruban (7), le procédé consiste à former préalablement ledit ruban (7) à partir d'une bande plate rectangulaire en acier inoxydable qui est roulée longitudinalement sur elle-même d'une manière telle que ses deux bords longitudinaux (7a,7b) soient en recouvrement, le ruban ainsi formé ayant au repos un diamètre extérieur légèrement supérieur au diamètre intérieur du tube de conduite d'eau, et en ce que le doublage intérieur du tube de conduite d'eau (3) consiste à rétreindre et à emmancher ledit ruban (7) dans le tube de conduite d'eau (3), l'élasticité du ruban en acier inoxydable une fois emmanché assurant le serrage de celui-ci contre le tube de conduite d'eau.

7. Procédé selon l'une des revendications précédentes, pour lequel le corps de chauffe (2) est en aluminium, caractérisé en ce que l'assemblage mécanique et thermique du tube de conduite d'eau (3) au corps de chauffe (2) est réalisé par brasage.

8. Procédé selon l'une des revendications 1 à 6, pour lequel le corps de chauffe (2) est en aluminium, caractérisé en ce que l'assemblage mécanique et thermique du tube de conduite d'eau (3) au corps de chauffe (2) est réalisé par une soudure à l'arc électrique sous flux de gaz neutre.

9. Procédé selon l'une des revendications précédentes, caractérisé en ce qu'il consiste en outre, après doublage intérieur du tube de conduite d'eau (3) et avant assemblage mécanique et thermique de celui-ci au corps de chauffe, à cintrer de manière homothétique le tube de conduite d'eau (3) et le corps de chauffe (2) suivant une conformation sensiblement en U.

10. Chauffe-eau électrique destiné à être monté dans un distributeur de boissons chaudes et comprenant un tube en aluminium de conduite d'eau (3) associé à un corps tubulaire de chauffe électrique (2), caractérisé en ce qu'il est obtenu par exécution du procédé selon l'une quelconque des revendications précédentes.

## Claims

1. Method of manufacturing an electric water heater which is designed to be mounted in a hot-drinks dispenser and which comprises an aluminium water-carrying tube (3) associated with a tubular electric heating body (2), characterised in that, starting from the water-carrying tube (3) and the heating body (2) formed separately, the said method consists of:
- internally lining the water-carrying tube (3) with a thin covering (5; 7) formed from a non-oxidizing material resistant to the operating temperature of the water heater,
- mechanical and thermally fitting the internally lined water-carrying tube (3) to the heating body (2).

2. Method according to Claim 1, characterised in that, the covering of the water-carrying tube being formed by a tube (5), the internal lining of the water-carrying tube (3) consists of fitting forcibly the said tube (5) into the water-carrying tube (3).

3. Method according to Claim 1, characterised in that, the covering of the water-carrying tube being formed by a tube (5), the internal lining of the water-carrying tube (3) consists of fitting the said tube (5) into the water-carrying tube (3) without clamping, then rolling the water-carrying tube (3) so as to ensure the clamping together of the two tubes (3, 5).

4. Method according to Claim 1, characterised in that, the covering of the water pipe being formed by a tube (5), the internal lining of the water-carrying tube (3) consists of fitting the said tube (5) into the water-carrying tube (3) without clamping, and then compressing the two tubes (3, 5) so as to ensure their clamping together.

5. Method according to one of Claims 2 to 4, characterised in that the material of the tube forming the lining (5) is stainless steel.

6. Method according to Claim 1, characterised in that, the covering of the water-carrying tube being formed by a band (7), the method consists of forming the said band (7) in advance from a rectangular flat strip of stainless steel which is rolled longitudinally onto itself in such a way that its two longitudinal edges (7a, 7b) overlap, the band thus formed having at rest an external diameter slightly greater than the internal diameter of the water-carrying tube, and in that the internal lining of the water-carrying tube (3) consists of compressing and fitting the said band (7) into the water-carrying tube (3), the elasticity of the stainless-steel band, once fitted, ensuring the clamping of the latter against the water-carrying tube.

7. Method according to one of the preceding claims, for which the heating body (2) is made of aluminium, characterised in that the mechanical and thermal fitting of the water-carrying tube (3) to the heating body (2) is carried out by brazing.

8. Method according to one of the Claims 1 to 6, for which the heating body (2) is made of aluminium, characterised in that the mechanical and thermal fitting of the water-carrying tube (3) to the heating body (2) is carried out by electric-arc welding under inert gas flow.

9. Method according to one of the preceding claims, characterised in that it also consists, after internal lining of the water-carrying tube (3) and before mechanical and thermal fitting of the latter to the heating body, of homothetically bending the water-carrying tube (3) and heating body (2) into an approximate U shape.

10. Electric water heater designed to be mounted in a hot-drinks dispenser and comprising an aluminium water-carrying tube (3) associated with a tubular electric heating body (2), characterised in that it is obtained by implementing the method according to any one of the preceding claims.

## Patentansprüche

1. Verfahren zur Herstellung eines zum Einbau in einen Spender für heiße Getränke bestimmten elektrischen Wassererhitzers, welcher ein mit einem rohrförmigen elektrischen Heizkörper (2) verbundenes Aluminiumrohr (3) zur Wasserleitung aufweist, **dadurch gekennzeichnet, daß** das Herstellungsverfahren, nachdem das Wasserleitungsrohr (3) und der Heizkörper (2) getrennt voneinander gebildet wurden, folgende Schritte aufweist:
- Verkleiden des Wasserleitungsrohres (3) von innen mit einer dünnen Auskleidung (5; 7) aus nichtoxidierbarem Material, welches bei der Gebrauchstemperatur des Wassererhitzers beständig ist,
- mechanisches und thermisches Verbinden des innen verkleideten Wasserleitungsrohres (3) mit dem Heizkörper (2).

2. Verfahren nach Anspruch 1, **dadurch gekennzeichnet, daß** die Auskleidung des Wasserleitungsrohres durch ein Rohr (5) gebildet ist und das innere Verkleiden des Wasserleitungsrohres durch kräftiges Einschieben des Rohrs (5) in das Wasserleitungsrohr (3) erfolgt.

3. Verfahren nach Anspruch 1, **dadurch gekennzeichnet, daß** die Auskleidung des Wasserleitungsrohres durch ein Rohr (5) gebildet ist und das innere Verkleiden des Wasserleitungsrohres durch reibungsfreies Einschieben des Rohrs (5) in das Wasserleitungsrohr (3) erfolgt, woraufhin dann das Wasserleitungsrohr (3) laminiert wird, so daß die zwei Rohre (3,5) fest verklemmt sind.

4. Verfahren nach Anspruch 1, **dadurch gekennzeichnet, daß** die Auskleidung des Wasserleitungsrohres durch ein Rohr (5) gebildet ist und das innere Verkleiden des Wasserleitungsohres durch reibungsfreies Einschieben des Rohrs (5) in das Wasserleitungsrohr (3) erfolgt, woraufhin dann die zwei Rohre (3, 5) zusammengepreßt werden, so daß sie fest verklemmt sind.

5. Verfahren nach einem der Ansprüche 2 bis 4, **dadurch gekennzeichnet, daß** das Rohr (5), welches zur Auskleidung dient, aus rostfreiem Stahl ausgebildet ist.

6. Verfahren nach Anspruch 1, **dadurch gekennzeichnet, daß** die Auskleidung des Wasserleitungsrohrs durch einen Streifen (7) gebildet ist und das Verfahren darin besteht, den Streifen (7) vorher aus einem flachen rechteckigen Edelstahlband herzustellen, welches der Länge nach so eingerollt ist, daß seine zwei Längsränder (7a, 7b) sich überlappen, wobei der so gebildete Streifen in Ruhestellung einen Außendurchmesser aufweist, der etwas größer ist als der Innendurchmesser des Wasserleitungsrohres, und daß die Innenverkleidung des Wasserleitungsrohres (3) durch Zusammendrücken und Einschieben des Streifens (7) in das Wasserleitungsrohr (3) erfolgt, wobei die Elastizität des eingesteckten Edelstahlstreifens gewährleistet, daß dieser dicht an dem Wasserleitungsrohr anliegt.

7. Verfahren nach einem der vorangehenden Ansprüche, bei dem der Heizkörper (2) aus Aluminium besteht, **dadurch gekennzeichnet, daß** die mechanische und thermische Verbindung des Wasserleitungsrohrs (3) mit dem Heizkörper (2) durch Löten hergestellt wird.

8. Verfahren nach einem der Ansprüche 1 bis 6, bei dem der Heizkörper (2) aus Aluminium besteht, **dadurch gekennzeichnet, daß** die mechanische und thermische Verbindung des Wasserleitungsrohres (3) mit dem Heizkörper (2) durch Lichtbogenschweißen unter Inertgasstrom hergestellt wird.

9. Verfahren nach einem der vorangehenden Ansprüche, **dadurch gekennzeichnet, daß** es außerdem darin besteht, nach dem Auskleiden des Wasserleitungsrohres (3) und vor dem mechanischen und thermischen Verbinden desselben mit dem Heizkörper (2) das Wasserleitungsrohr (3) und den Heizkörper (2) homothetisch entsprechend im wesentlichen einem U zu biegen.

10. Elektrischer Wassererhitzer zum Einbau in einen Spender für heiße Getränke mit einem Aluminiumrohr als Wasserleitung (3), welches mit einem Heizkörper (2) verbunden ist, **dadurch gekennzeichnet, daß** er mit Hilfe des Verfahrens gemäß der vorangehenden Ansprüche erhalten wird.
